# EUROPEAN PATENT APPLICATION

(11) **EP 4 209 828 A1**
(43) Date of publication of application: **12.07.2023**
(21) Application number: 22150623.1
(22) Date of filing: 07.01.2022
(51) Int. Cl.: G02B 27/48

(54) **DESPECKLING METHOD AND APPARATUS**

(71) Applicant: Microsoft Technology Licensing, LLC, Redmond, WA 98052-6399 (US)
(72) Inventor: WILLIAMS, Hugh, David Paul, Cambridge (GB); GOMEZ DIAZ, Ariel, Cambridge (GB); KUNKEL IV, William, Minster, Cambridge (GB)
(74) Representative: Townsend, Martyn

(57) **Abstract**

A system comprising: an actuator; a signal generator configured to apply an electric signal to the actuator to expand and contract the actuator; an optical fibre associated with the actuator, the optical fibre configured to lengthen when the actuator expands and shorten when the actuator contracts; a coherent light source configured to transmit a coherent light through the optical fibre to provide illumination during the lengthening and shortening of the optical fibre.

## Description

### Technical Field

The present disclosure relates to a mechanism for reducing observed interference in coherent wavefronts. In a particular example, a method for reducing observed speckle in a light produced by a coherent light source (e.g., a laser) is described.

### Background

Light can be used to read optical storage media. This can be achieved by illuminating an area in an optical storage medium and detecting light emitted from the optical storage medium. Optical storage media are being developed (e.g., Project Silica) that have advantages over other example data storage technologies such as hard disk drives, magnetic tape, flash memory, and optical discs. One such advantage is that they require data to be copied onto replacement media less often. This reduces energy usage and hardware requirements.

In some systems involving coherent wavefronts (e.g., radar, medical ultrasound, lasers) a speckle pattern may be produced by mutual interference of the coherent wavefronts.

Speckle in a laser output may be reduced using "despecklers". Despecklers include oscillating diffusers. Such diffusers change the field distribution as it moves. Motion of the oscillating diffuser can be rotational or translational. Such a system is described in "A laser speckle reduction system", Joshua M. Cobb, Paul Michalowski, Corning Advanced Optics. Quality of such despecklers is limited by the achievable diffuser velocity. Intensity fluctuations may be caused if the diffuser is off axis. The rotation speed of a rotating diffuser cannot be easily made fast enough to generate the required interference patterns to provide despeckling for high bandwidth applications.

### Summary

According to a first aspect disclosed herein, there is provided a system comprising an actuator. The system also comprises a signal generator configured to apply an electric signal to the actuator to expand and contract the actuator. The system also comprises an optical fibre associated with the actuator. The optical fibre is configured to lengthen when the actuator expands and shorten when the actuator contracts. The system also comprises a coherent light source coupled and guided through the optical fibre core to provide illumination during the lengthening and shortening of the optical fibre. The partially coherent output light may in some examples be used to provide reduced speckle, or speckle-free, homogeneous illumination.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all the disadvantages noted herein.

### Brief Description of the Drawings

To assist understanding of the present disclosure and to show how embodiments may be put into effect, reference is made by way of example to the accompanying drawings in which:
Figure 1 is a schematic block diagram of an imaging system as disclosed herein;
Figure 2 is a schematic block diagram of an imaging system as disclosed herein;
Figure 3 is a diagram of a despeckler in accordance with embodiments disclosed herein;
Figure 4 is a diagram of a despeckler in accordance with embodiments disclosed herein; and
Figure 5 is a histogram showing noise associated with different examples for reading optical storage media in accordance with embodiments disclosed herein; and
Figure 6 is a method flow diagram.

### Detailed Description

The present disclosure relates to a system, method, and computer-readable storage device for reducing speckle in light transmitted from a coherent light source. The computer-readable storage device may comprise computer program instructions for performing the method of reducing speckle in light transmitted from a coherent light source.

An example application is for reading of optical storage media. An optical data storage medium may comprise a transparent substrate, for example a quartz glass substrate. Data can be encoded in 3-dimensional structures formed in the substrate. These structures are referred to as voxels.

An example application may be for high throughput optical readers to image densely packed data in Silica glass. This can be used for optical storage. In such an example, high radiance sources may be required. Coherent light sources can be used to satisfy this high radiance illumination requirement. However, in some examples, coherent sources produce "noisy" illumination in the form of speckle patterns. Examples provide a speckle reduction system, method, computer program and computer readable medium for reducing speckle from coherent light source to provide high radiance illumination with more homogeneity.

A voxel has optical properties which differ from the surrounding bulk substrate. Voxels may be birefringent such that voxels may display different refractive indices depending on the direction and polarization of incident light. During a writing process of the optical storage media, the optical properties can be controlled (modified) to encode data.

To read data from an optical storage medium, an imaging system using a light source is used.

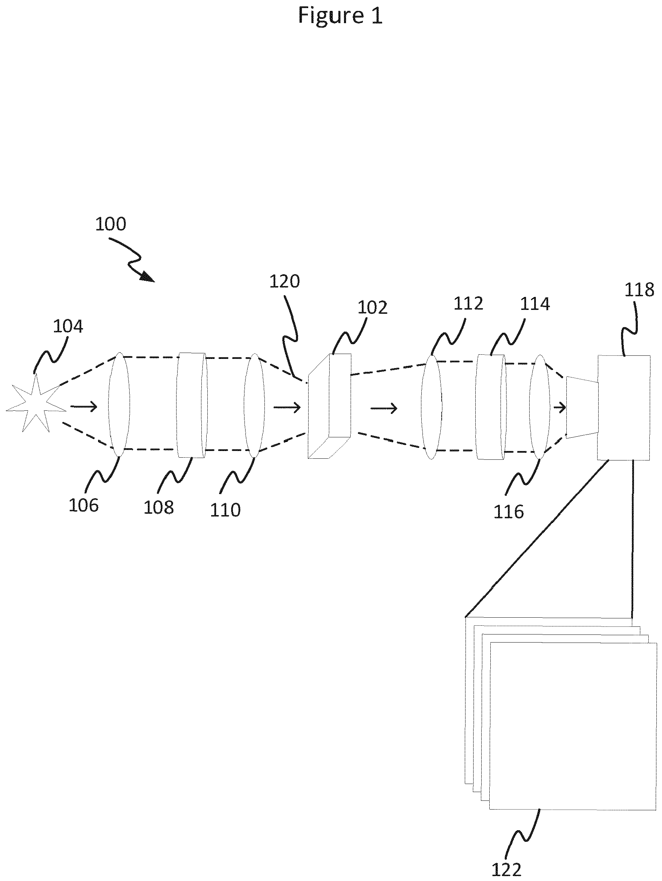

Figure 1 illustrates an example system 100 in which data can be read from an optical storage medium 102. A light source 104 transmits light 120 towards optical storage medium 102. Optical storage medium 102 may comprise voxels upon which data is encoded. Light source 104 may comprise a coherent light source e.g., a laser source. As such, light 120 may comprise coherent light 120 e.g., light emitted by a laser. It should be noted that system 100 may comprise fewer optics, filters, and lenses and in some examples may comprise more optics, filters, and lenses.

Light 120 may be transmitted towards optics system 106 to provide the light beam at the correct angle, etc. In some examples, the optics may comprise one or more optical fibres. A filter 108 may then be used to filter light 120. Filter 108 may comprise one or more wavelength filters. Filter 108 may also comprise, additionally or alternatively to the one or more wavelength filters, one or more polarisation filters. In some examples, the polarisation filters may be used in a system 100 where one or more of filters 108 and 114 are used in combination with camera 118 to detect birefringence. In some examples, filter 108 may be considered to comprise a polarization control unit. The polarisation control unit may set the illumination polarisation using one or more polarisation components and/or a wavelength filter. Polarisation control unit may include one or more polarization components. As an example, the one or more polarization components may comprise one or more of: polarisers, retarders, liquid crystal variable retarders. The filtered light passes through one or more focusing lenses 110 to focus the light on to a portion of optical storage medium 102.

A portion of optical storage medium 102 is illuminated to read one or more features of optical storage medium 102. The light may then be further focused by one or more focusing lenses 112. The light then may pass through a filter 114 and a further optics system 116 before being read by a camera 118. Filter 114 may comprise one or more wavelength filters. Filter 114 may also comprise, additionally or alternatively to the one or more wavelength filters, one or more polarisation filters. In some examples, the polarisation filters may be used in a system 100 where one or more of filters 108 and 114 are used in combination with camera 114 to detect birefringence. In some examples, filter 114 may be considered to comprise a polarization control unit. The polarisation control unit may set the polarisation of the light imaged by camera 118 using one or more polarisation components and/or a wavelength filter. Polarisation control unit may include one or more polarization components. As an example, the one or more polarization components may comprise one or more of: polarisers, retarders, liquid crystal variable retarders. Camera 118 may then capture the transmitted light to provide one or more images 122. Images 122 may comprise wide-field images. The camera may image more than one feature in optical storage medium 102 simultaneously. The images 122 can be used to read the data stored in optical storage medium 102. Camera 118 may comprise a shutter. The shutter may open and shut at a shutter speed. In examples, the shutter may be a mechanical shutter that physically opens and shuts. In other examples, the shutter could be an electronic shutter that does not physically open and shut but instead electronically sets the image exposure duration.

It should be noted that although Figure 1 shows a system in which illumination is transmitted through optical storage medium 102, in other examples light may be reflected from optical storage medium 102 and then captured by camera 118. Such an example may comprise similar optical systems, which in some examples may comprise fewer components, and in some examples may comprise one or more additional: lenses; filtering lenses; beamsplitters; polarisation components. Polarisation components may include, for example, one or more of: polarisers; retarders; liquid crystal variable retarders.

In some examples, camera 118 may be replaced by any other light detection method including any known 1D, 2D or 3D imaging system.

If speckle is present when imaging optical storage medium 102, this may obscure the characteristic features of optical storage medium 102 used to store data, which may prevent accurate reading of data from optical storage medium 102. Speckle may result from the interaction of coherent light when passing through 102 and then be imaged through the optical system 100 by camera 118. A despeckler as described below can be used in such a situation to reduce speckle. Various other situations are also envisaged in which such a despeckler could be used, for example in video projectors, other imaging systems, holography, etc.

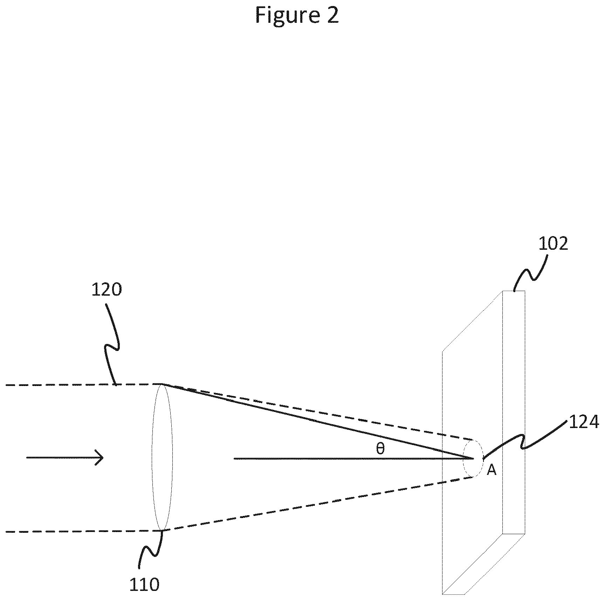

Figure 2 shows a magnified view of a section between focusing lens 110 and optical storage medium102. Light 120 passes through focusing lens 110 in a first direction. Light 120 is focused at an acute angle θ to the first direction to provide a cone of illumination for optical storage medium 102. The cone of illumination illuminates an area of interest A 124 on the surface of optical storage medium 102. This can be used to illuminate voxels of optical storage medium 102.

To provide a high throughput read (MB/sec) of optical storage medium 102, it is required to increase the rate of features illuminated per unit time. This is linked to the data throughput as each feature will encode data. To read optical storage medium 102, it can be useful to provide a fixed number of photons per feature of optical storage medium 102. This is because for a given feature quality and technique there will be a required level of illumination for a correct decode. In this situation of a fixed number of photons per feature, it is required to increase the number of photons per unit time that pass through optical storage medium 102. This must be taken into account while delivering photons to voxels in an area A 124 and in the cone of illumination angles θ. These requirements can be taken into account using radiance. In other words, by increasing radiance of illumination 120 incident on optical storage medium 102, more photons per unit time can be delivered to voxels in an area of interest A 124 in a cone of illumination angles θ. When there is a fixed number of photons per feature, increasing radiance of illumination 120 increases the rate of features illuminated per unit time to provide a higher throughput read of optical storage medium 102.

Radiance can be considered to be a power of an illumination source divided by the etendue of the illumination source. Etendue is equal to an emitter area multiplied by a solid angle of illumination of the illumination source. A fluorescent bulb has a low radiance in comparison to a laser, which has high radiance.

It can therefore be useful to use lasers when reading optical storage media, due to the high radiance which are provided by the lasers. However, when using coherent light sources such as lasers there is an issue with speckle, which prevents reliable reading of optical storage medium 102. Speckle is a result of the interference between many waves of the same frequency, having different phases and amplitudes, which add constructively or destructively to give a resultant wave whose amplitude, and therefore intensity, varies randomly across the space.

An experiment in which a required throughput read of 100MB/sec is considered. In this estimate, shot noise limitations at camera are present, an exposure time of around 0.5ms is used and there is moderate optical loss. In such an example experiment, a radiance of 3 W/mm²/sr (where sr=steradian) is required. If this value is compared to available LEDs which have a radiance of around 0.1 W/mm²/sr, it is clear that LEDs cannot provide the required radiance. A laser (e.g., a multimode laser) can provide a radiance of 100 W/mm²/sr. It is therefore clear that a laser rather than an LED is required to be used in order to provide the required radiance in this example. It should be noted that in some examples, a pulsed mode may operate of a light source in which even higher radiance is required to achieve the same average radiance. It is therefore useful that a laser can provide more radiance (100 W/mm²/sr) than the required radiance 3 W/mm²/sr.

Speckle produced by coherent light sources can be reduced using despecklers. Despecklers average many patterns of a light source to reduce observed random interference between coherent waves. Despecklers generate many independent random speckle patterns that, when added together over the integration time of the detector (e.g., camera 118), incoherently add to each other to average each other out, giving rise to the deterministic image coming from optical storage medium features (e.g., of optical storage medium 102) themselves. The resulting image may be similar to an image that could be generated if an incoherent source (e.g., an LED) was used.

There are multiple factors that affect the contrast a given optical setup has, e.g., how broadband (in wavelength) a particular source is. However, given a certain setup there will be a certain static contrast. If during time *T* a despeckler is used that is able to iterate through *N* independent speckle patterns (each with identical contrast), then the observed contrast will be 1/*√N* of the static contrast. As such, to achieve a 100 times reduction in contrast (a contrast of 1%), 100²=10⁴ independent patterns are required in time *T*. The rate of independent patterns is also inversely proportional to *T.* If *T* is halved, then to achieve the same image you still need the same *N*, but now the rate of independent patterns has doubled.

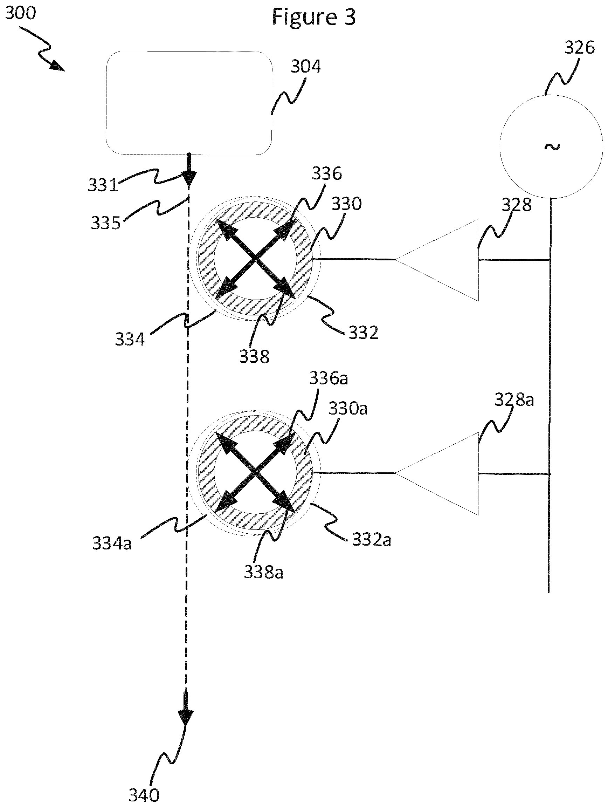

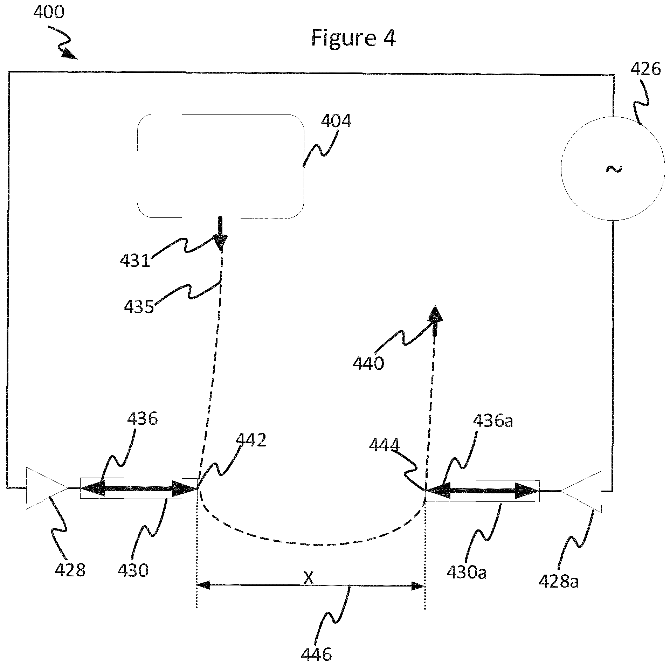

In examples, despecklers may be considered to provide a rate of independent patterns (*N*/*T*), and in examples that repeat patterns, a rate of repetition. For example, the rate of repetition of a rotating diffuser is determined by how frequently the same point on the rotating diffuser is reached. When the same point on the rotating diffuser is reached, the same speckle pattern is provided. In the examples of Figures 3 and 4 below, the same speckle pattern is provided each time an optical fibre has a same dimension. The rate of repetition is therefore determined by how frequently the fibre is lengthened and shortened. If repetition time < *T*, all *N* independent patterns are captured and contribute to despeckling. If repetition time > *T*, then all possible independent patterns are not utilized during period T. This could occur for example in a situation with a frequency of repetition of ∼100Hz and an exposure time of <1 ms. If *T*> repetition time of a despeckler, then the rate of independent patterns is not as important as the total number of independent patterns that can be produced in the repeating pattern. If *T*< repetition time of a despeckler, then the rate of independent patterns and time *T* determine *N*. Having a repetition period < exposure time gives the property of constant performance independent of shutter time (as performance is limited by max number of independent patterns you can achieve). Taking this into account in an example, for an exposure time of *T* of 1ms, it is useful to have a despeckler repetition rate of 10kHz to 100kHz so that the repetition period (1/repetition rate) is < *T*.

In examples, the interference pattern arising from the superposition of different fibre modes of an optical fibre produce a well-defined speckle pattern at a given point in time t₁. At time t₂, the lengthening/contraction of the fibre may have changed the mode characteristics, and more importantly, the relative phase between them, hence their interference would produce an independent and new speckle pattern. If the same happens at time t₃ to tₙ, and the integration time of the detector is tₙ to t₁, then independent speckle patterns are provided that add each other in intensity resulting in an incoherent homogeneous illumination.

In examples, despeckling is achieved through time averaging of mode changes that occur by lengthening and stressing an optical fibre. The optical fibre may be a multimodal optical fibre.

In the following examples, one or more actuators may be used to lengthen and shorten an optical fibre. The one or more actuators may comprise a piezoelectric element such as: a piezoelectric cylinder; a linear piezoelectric actuator; a striped piezoelectric cylinder. In some examples, the one or more actuators may comprise a voice coil actuator.

Figure 3 shows an example of a system 300 that can be used to despeckle a coherent light source 304. Coherent light source 304 may comprise a laser. In some examples, coherent light source 304 may comprise a multimode (MM) laser.

Coherent light 331 is passed through optical fibre 335. A signal generator 326 produces an electric signal which in some examples is amplified by amplifier 328. In some examples an amplifier may not be present. The electric signal may oscillate at a frequency of 10-20 kHz. In some examples, the electric signal may oscillate at a frequency of 17kHz. In other examples, the electrical signal may oscillate at a frequency between 2kHz and 100kHz. In some examples, the electric signal may oscillate at a resonant frequency of actuator 330.

The electric signal is applied to an actuator 330. In the example of Figure 3, actuator 330 comprises a piezoelectric element, but other actuators that expand and contract upon receiving an electric signal may be used. In the example of Figure 3, the piezoelectric element comprises a piezoelectric cylinder. The signal causes piezoelectric cylinder 330 to flex radially as the signal is applied. The signal causes the piezoelectric cylinder 330 to expand in directions 336 and 338 and contract following the expansion. The electric signal causes actuator 330 to expand and contract over time. In some examples, the electric signal may have a periodic waveform. In some examples, the electric signal may oscillate at a frequency. In some examples, the electric signal may be sinusoidal. In some examples, the actuation (expansion and contraction) of actuator 330 may be synchronized with a pulsed illumination or pulsed detection by using a shutter. This could be a shutter of camera 118 in the example of Figure 1, for example. In some examples, this may reduce power draw where the duty cycle of the light used for measurement is relatively low. In such an example, a periodic signal might be applied to actuator 330 during a strobe.

Optical fibre 335 may be mechanically coupled to actuator 330. Optical fibre 335 may be wrapped around actuator 330 at loop 332 and loop 334. As piezoelectric cylinder 330 flexes at the oscillating frequency of the signal generator, the length of the optical fibre is lengthened and shortened at the oscillating frequency. Simultaneously, coherent light is transmitted through optical fibre. By averaging patterns of lengthening and shortening optical fibre 335, speckle from illumination 340 at the end of optical fibre 335, observed speckle can be reduced. This is achieved by reducing coherence in the illumination using the despeckler.

In some examples, instead of providing a complete loop 332 of optical fibre 335 around piezoelectric cylinder 330, optical fibre 335 may be bent around only a portion of piezoelectric cylinder 330 (e.g., a semicircle). In some examples, optical fibre 335 may be attached to a part of piezoelectric cylinder 330 to lengthen and shorten optical fibre 335.

In order to increase an amount by which optical fibre 335 is lengthened and shortened, the number of loops of optical fibre 335 around piezoelectric cylinder 330 can be increased. This can be used to improve despeckling performance.

In order to increase an amount by which optical fibre 335 is lengthened and shortened, further actuators may be provided which are also driven at oscillating frequencies. In the given example of Figure 3, a second actuator 330a is provided in which the signal generator 326 provides an electric signal (optionally via amplifier 328a) to flex piezoelectric cylinder 330a along directions 336a and 338a. In some examples, a separate signal generator other than signal 326 may drive actuator 330a. The electric signal causes actuator 330a to expand and contract over time. In some examples, the electric signal may have a periodic waveform. In some examples, the electric signal may have an oscillating frequency. In some examples, the electric signal may be sinusoidal. In some examples, the actuation (expansion and contraction) of actuator 330a may be synchronized with a pulsed illumination or pulsed detection by using a shutter. This could be a shutter of camera 118 in the example of Figure 1, for example. In some examples, this may reduce power draw where the duty cycle of the light used for measurement is relatively low. In such an example, a periodic signal might be applied to actuator 330a during a strobe. In the example of Figure 3, actuator 330a comprises a piezoelectric cylinder, but other actuators that expand and contract upon receiving an electric signal may be used. This can be used to lengthen and shorten optical fibre 335 due to loops 332a and 334a around cylinder 330a. It should be noted that in some examples, a second signal generator may be provided to supply the electric signal separately from actuator 330 to actuator 330a. Optical fibre 335 may be mechanically coupled to actuator 330a.

In some examples, only one piezoelectric element (e.g., piezoelectric element 330) is provided. In some examples, one or more piezoelectric elements (e.g., piezoelectric element 330a) are provided. The one or more piezoelectric elements may comprise a linear piezoelectric actuator as described below with respect to Figure 4.

Despeckled coherent light 340 may be used to read optical storage media. Despeckled coherent light 340 may be transmitted to one or more voxels.

In some examples, system 300 is designed to ensure that a minimum bend radius of optical fibre 335 is not exceeded. This prevents damage to optical fibre 335. The minimum bend radius may be provided by a manufacturer of optical fibre 335. For example, the piezoelectric elements may be selected in order to ensure that the minimum bend radius of optical fibre 335 is respected. For example, piezoelectric cylinder 330 and, if provided, piezoelectric cylinder 330a may have a radius greater than the minimum bend radius of optical fibre 335. This ensures that optical fibre 335 is achieved by "macrobending" of optical fibre 335 rather than "microbending" of optical fibre 335. Microbending can cause damage of optical fibre 335.

In some examples, at least one of piezoelectric elements 330 and 330a may comprise a striped piezoelectric cylinder.

Figure 4 shows a different system 400 for despeckling a coherent light source 404. It should be noted that one or more elements of Figure 4 (e.g., linear piezoelectric actuator 430 and/or linear piezoelectric actuator 430a) can be combined with elements of Figure 3 (e.g., piezoelectric cylinder 330 and/or piezoelectric cylinder 330a) to provide oscillating lengthening and shortening of an optical fibre to despeckle coherent light transmitted through the optical fibre. In the example of Figure 4, actuators 430 and 430a each comprise a linear piezoelectric actuator, but other actuators that expand and contract upon receiving an electric signal may be used. For example, a voice coil actuator may be used. Optical fibre 435 may be mechanically coupled to linear piezoelectric actuators 430 and 430a.

Signal generator 426 provides an electric signal which is provided to actuator 430. As the electric signal is applied, piezoelectric element 430 flexes along its longitudinal axis to lengthen and shorten along direction 436. The electric signal may be provided via amplifier 428. The electric signal causes actuator 430 to expand and contract over time. In some examples, the electric signal may have a periodic waveform. In some examples, the electric signal may have an oscillating frequency. In some examples, the electric signal may be sinusoidal. In some examples, the actuation (expansion and contraction) of actuator 430 may be synchronized with a pulsed illumination or pulsed detection by using a shutter. This could be a shutter of camera 118 in the example of Figure 1, for example. In some examples, this may reduce power draw where the duty cycle of the light used for measurement is relatively low. In such an example, a periodic signal might be applied to actuator 430 during a strobe.

Optical fibre 435 may be connected to piezoelectric element 430 at 442. Connection 442 may be mechanical (e.g., a clip, glue) or any other suitable connection.

Signal generator 426 provides the electric signal which is provided to linear piezoelectric actuator 430a. It should be noted that in some examples a separate signal generator other than signal generator 426 may be provided for piezoelectric element 430a. As the electric signal is applied, piezoelectric element 430a flexes along its longitudinal axis to lengthen and shorten along direction 436a. The electric signal may be provided via amplifier 428a. The electric signal causes actuator 430a to expand and contract over time. In some examples, the electric signal may have a periodic waveform. In some examples, the electric signal may have an oscillating frequency. In some examples, the electric signal may be sinusoidal. In some examples, the actuation (expansion and contraction) of actuator 430a may be synchronized with a pulsed illumination or pulsed detection by using a shutter. This could be a shutter of camera 118 in the example of Figure 1, for example. In some examples, this may reduce power draw where the duty cycle of the light used for measurement is relatively low. In such an example, a periodic signal might be applied to actuator 430a during a strobe.

Optical fibre 435 may be connected to piezoelectric element 430a at 444. Connection 444 may be mechanical (e.g., a clip, glue) or any other suitable connection.

The length *X* 446 of a section of optical fibre 435 is lengthened and shortened at the frequency of oscillating electric signal of signal generator 426.

Coherent light 431 is passed through optical fibre 435. The electric signal may oscillate at a frequency of 10-20 kHz. In some examples, the oscillating electric signal may oscillate at a frequency of 17kHz. In other examples, the electrical signal may oscillate at a frequency between 2kHz and 100kHz. In some examples, the oscillating electric signal may oscillate at a resonant frequency of the piezoelectric element 430 and/or 430a.

In some examples, the optical fibre 435 may be wrapped around piezoelectric element 430 or piezoelectric element 430a to increase the amount by which length X is lengthened and shortened. This can be used to increase despeckling performances.

In some examples, system 400 is designed to ensure that a minimum bend radius of optical fibre 435 is not exceeded. This prevents damage to optical fibre 435. The minimum bend radius may be provided by a manufacturer of optical fibre 435. For example, the piezoelectric elements may be selected in order to ensure that the minimum bend radius of optical fibre 435 is respected. For example, piezoelectric element 430 and piezoelectric element 430a may be positioned such that the amount by which optical fibre 435 is required to curve to attach to both piezoelectric element has a curve radius greater than the minimum bend radius of optical fibre 435. This ensures that optical fibre 435 is achieved by "macrobending" of optical fibre 435 rather than "microbending" of optical fibre 435. Microbending can cause damage of optical fibre 435.

Further systems using actuators powered by an electric signal are envisaged. For example, a single actuator 430 could be used in system 400 such that actuator 430a is not present. Optical fibre 435 may be connected at point 442 to actuator 430 and also connected to actuator 436 at another point displaced along direction 436. As such, the optical fibre is mechanically coupled to the actuator. Upon application of an electric signal and as actuator 430 lengthens and shortens along direction 436, illumination can be passed through optical fibre 435. Speckle is reduced due to the lengthening and shortening of the optical fibre 435 during the illumination. The actuator may comprise a piezoelectric element, for example. In some examples, the actuator may comprise a linear piezoelectric actuator.

A further example system may comprise an optical fibre such as 335 or 435 wrapped around a cylinder in a similar way to the example of Figure 3. Inside the cylinder, an actuator may be positioned along the diameter of the cylinder. The actuator may have a similar length to the diameter of the cylinder. As an electric signal is applied to the actuator, the actuator may lengthen and shorten and cause a corresponding increase and decrease in the diameter of the cylinder. In other words, rather than the cylinder flexing due to application of an electric signal to the cylinder as in Figure 3, an actuator inside of the cylinder may have an electric signal applied and the actuator may cause the flexing of the cylinder. As such, the optical fibre is mechanically coupled to the actuator. In some examples, the actuator could be linear or approximately linear. The actuator may comprise a piezoelectric element, for example. In some examples, the actuator may comprise a linear piezoelectric actuator.

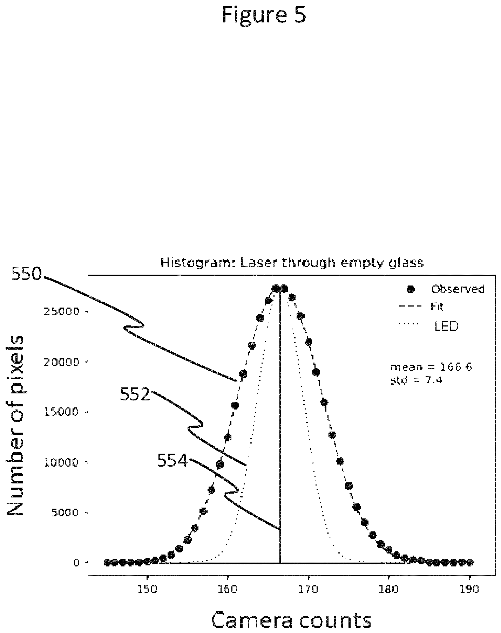

Figure 5 shows a comparison of data for a laser through empty glass in a single-shot method. A number of pixels is provided on the y-axis and a number of camera counts on the x-axis. An ideal distribution is shown at 554. A distribution of an LED is shown at 552. For the distribution 552, variance σ*_{Tot}*² = *σ_{Shot}²* + *σ_{Camera}²* where *σ_{Shot}²* is noise introduced by shot noise and *σ_{Camera}²* is noise introduced by the camera. Shot noise may comprise noise that follows a Poisson process, and is present to the flow of electrons/photons arising from their discrete particle nature. Shot noise may be considered to be a property of the sampled signal rather than a property of the camera. A distribution of a laser is shown at 550. For the distribution 550, variance *σ_{Tot}*² = *σ_{Shot}²* + *σ_{Camera}*² + *σ_{Speckle}²* where *σ_{Speckle}²* is noise caused by coherent light source speckle. Systems described above can significantly reduce *σ_{Speckle}².*

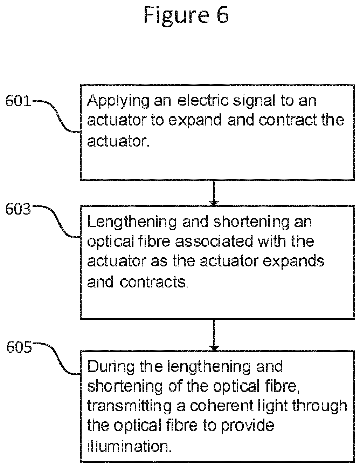

Figure 6 shows an example method flow that could be applied in systems such as system 300 or system 400, or in similar systems. At 601, an electric signal is applied to an actuator to expand (lengthen) and contract the actuator.

At 603, the optical fibre is lengthened and shortened as the actuator expands and contracts. The optical fibre may be associated with the piezoelectric element by being wrapped around the actuator or by being attached or connected to the actuator.

At 605, during the lengthening and shortening of the optical fibre, a coherent light is transmitted through the optical fibre to provide illumination.

Example systems may provide a high speed despeckler. Application speed is only limited by drive frequency. Use of fast drive elements e.g., resonant piezoelectric elements at 10 kHz or more provide despeckling in a sub millisecond timeframe.

Examples systems may provide a low loss despeckler by ensuring the optical fibre bend radii constraints are observed. This ensures minimal optical loss to enable higher radiance designs. Example systems may provide scalable performance that does not experience a reduction in image quality in comparison to incoherent light sources (e.g., LED) and provides negligible remaining speckle contrast. The number of sections of optical fibres that can be stretched can be increased to scale up performance. The number of turns around expanding cylinders (when used) can be used to scale up performance. As such, performance can be increased without increasing the sampling time. The system also comprises a solid-state design that requires little maintenance.

In examples, systems can have one or more interchangeable piezoelectric elements to account for different applications. Different applications may require different optical fibre diameters with different safe bend radii (minimum bend radii) and stressing the fibre can preferentially attenuate some modes over others. By interchanging piezoelectric elements, a wide range of optical specifications can be achieved.

In examples, the combination of a laser source with flexible optical specification (oscillating lengthening and shortening of an optical fibre) and low loss allows etendue engineering to optimise the efficiency of illumination.

One or more elements of the systems described above may be controlled by a processor and associated memory comprising computer readable instructions for controlling the system. The processor may control one or more signal generators. The processor may control one or more light sources. Circuitry or processing systems may also be provided to control one or more systems.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (e.g., a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

According to a first aspect there is provided a system comprising: an actuator; a signal generator configured to apply an electric signal to the actuator to expand and contract the actuator; an optical fibre associated with the actuator, the optical fibre configured to lengthen when the actuator expands and shorten when the actuator contracts; a coherent light source configured to transmit a coherent light through the optical fibre to provide illumination during the lengthening and shortening of the optical fibre.

According to some examples, the actuator comprises a piezoelectric element.

According to some examples, the electric signal oscillates at a frequency of 2kHz to 100kHz.

According to some examples, at least a portion of the optical fibre is wrapped around at least a portion of the actuator.

According to some examples, the optical fibre is configured to lengthen when the actuator expands and shorten when the actuator contracts by bending the optical fibre at a bend radius greater than a minimum bend radius, the minimum bend radius for preventing damage of the optical fibre.

According to some examples, the actuator comprises a piezoelectric cylinder, and wherein a portion of the optical fibre is wrapped around at least part of the piezoelectric cylinder.

According to some examples, the system is configured to increase an amount by which the optical fibre is wrapped around the piezoelectric cylinder in order to: increase an amount by which the optical fibre lengthens when the actuator expands; and increase an amount by which the optical fibre shortens when the actuator contracts.

According to some examples, the system is configured to increase an amount by which the optical fibre is wrapped around the piezoelectric cylinder by increasing a number of times that the optical fibre is wrapped around the piezoelectric cylinder.

According to some examples, the actuator comprises a linear piezoelectric actuator, and wherein the optical fibre is mechanically coupled to the linear piezoelectric actuator.

According to some examples, the system comprises: one or more further actuators that are configured to expand and contract upon application of the electric signal; wherein the optical fibre is configured to lengthen and shorten further as the one or more further actuators expand and contract.

According to some examples, the illumination is delivered to one or more voxels.

According to some examples, the coherent light is despeckled by transmitting the coherent light during the lengthening and shortening of the optical fibre.

According to some examples, the electric signal oscillates at a resonant frequency of the actuator.

According to some examples, the electric signal has a periodic waveform.

According to a second aspect, the is provided a method comprising: applying an electric signal to an actuator to expand and contract the actuator; lengthening and shortening an optical fibre associated with the actuator as the actuator expands and contracts; during the lengthening and shortening of the optical fibre, transmitting a coherent light through the optical fibre to provide illumination. In some examples, the second aspect may be computer-implemented.

According to some examples, the actuator comprises a piezoelectric element.

According to some examples, the electric signal oscillates at a frequency of 2kHz to 100kHz.

According to some examples, at least a portion of the optical fibre is wrapped around at least a portion of the actuator.

According to some examples, the method comprises lengthening the optical fibre when the actuator expands and shortening the optical fibre when the actuator contracts by bending the optical fibre at a bend radius greater than a minimum bend radius, the minimum bend radius for preventing damage of the optical fibre.

According to some examples, the actuator comprises a piezoelectric cylinder, and wherein a portion of the optical fibre is wrapped around at least part of the piezoelectric cylinder.

According to some examples, the method comprises increasing an amount by which the optical fibre is wrapped around the piezoelectric cylinder in order to: increase an amount by which the optical fibre lengthens when the actuator expands; and increase an amount by which the optical fibre shortens when the actuator contracts.

According to some examples, the method comprises increasing an amount by which the optical fibre is wrapped around the piezoelectric cylinder by increasing a number of times that the optical fibre is wrapped around the piezoelectric cylinder.

According to some examples, the actuator comprises a linear piezoelectric actuator, and wherein the optical fibre is mechanically coupled to the linear piezoelectric actuator.

According to some examples, method comprises: expanding and contracting one or more further actuators upon application of the electric signal; wherein the optical fibre is configured to lengthen and shorten further as the one or more further actuators expand and contract.

According to some examples, the illumination is delivered to one or more voxels.

According to some examples, the coherent light is despeckled by transmitting the coherent light during the lengthening and shortening of the optical fibre.

According to some examples, the electric signal oscillates at a resonant frequency of the actuator.

According to some examples, the electric signal has a periodic waveform.

According to a third aspect, there is provided a computer-readable storage device comprising instructions executable by a processor for executing the method of the second aspect, or any of the examples of the second aspect.

According to the fourth aspect, there is provided computer equipment comprising: memory comprising one or more memory units; and processing apparatus comprising one or more processing units, wherein the memory stores code arranged to run on the processing apparatus, the code being configured so as when on the processing apparatus to perform the method of the second aspect, or any of the examples of the second aspect.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A system comprising:
an actuator;
a signal generator configured to apply an electric signal to the actuator to expand and contract the actuator;
an optical fibre associated with the actuator, the optical fibre configured to lengthen when the actuator expands and shorten when the actuator contracts;
a coherent light source configured to transmit a coherent light through the optical fibre to provide illumination during the lengthening and shortening of the optical fibre.

2. A system according to claim 1, wherein the actuator comprises a piezoelectric element.

3. A system according to claim 1 or claim 2, wherein the electric signal oscillates at a frequency of 2kHz to 100kHz.

4. A system according to any preceding claim wherein at least a portion of the optical fibre is wrapped around at least a portion of the actuator.

5. A system according to claim 4, wherein the optical fibre is configured to lengthen when the actuator expands and shorten when the actuator contracts by bending the optical fibre at a bend radius greater than a minimum bend radius, the minimum bend radius for preventing damage of the optical fibre.

6. A system according to any preceding claim, wherein the actuator comprises a piezoelectric cylinder, and wherein a portion of the optical fibre is wrapped around at least part of the piezoelectric cylinder.

7. A system according to claim 6, wherein the system is configured to increase an amount by which the optical fibre is wrapped around the piezoelectric cylinder in order to:
increase an amount by which the optical fibre lengthens when the actuator expands; and
increase an amount by which the optical fibre shortens when the actuator contracts.

8. A system according to claim 7, wherein the system is configured to increase an amount by which the optical fibre is wrapped around the piezoelectric cylinder by increasing a number of times that the optical fibre is wrapped around the piezoelectric cylinder.

9. A system according to any of claims 1 to 5, wherein the actuator comprises a linear piezoelectric actuator, and wherein the optical fibre is mechanically coupled to the linear piezoelectric actuator.

10. A system according to any preceding claim, wherein the system comprises:
one or more further actuators that are configured to expand and contract upon application of the electric signal;
wherein the optical fibre is configured to lengthen and shorten further as the one or more further actuators expand and contract.

11. A system according to any preceding claim, wherein the illumination is delivered to one or more voxels.

12. A system according to any preceding claim, wherein the coherent light is despeckled by transmitting the coherent light during the lengthening and shortening of the optical fibre.

13. A system according to any preceding claim, wherein the electric signal oscillates at a resonant frequency of the actuator.

14. A system according to any preceding claim, wherein the electric signal has a periodic waveform.

15. A method comprising:
applying an electric signal to an actuator to expand and contract the actuator;
lengthening and shortening an optical fibre associated with the actuator as the actuator expands and contracts;
during the lengthening and shortening of the optical fibre, transmitting a coherent light through the optical fibre to provide illumination.
